# FASCICULE DE BREVET EUROPEEN

(11) **EP 0 540 433 B1**
(45) Date de publication et mention de la délivrance du brevet: **08.03.1995**
(21) Numéro de dépôt: 92420379.7
(22) Date de dépôt: 23.10.1992
(51) Int. Cl.: B65G 65/40, B65G 47/19, B65G 65/48

(54) **Dispositif pour l'extraction d'un produit à l'état divisé et pour son dosage volumétrique**
Einrichtung zum Fördern und volumetrischen Dosieren von Schüttgut
Device for conveying and volumetric dosing of bulk material

(30) Priorité: 28.10.1991 FR 9113277
(43) Date de publication de la demande: 05.05.1993
(73) Titulaire: SYMAC, F-92500 Rueil-Malmaison (FR)
(72) Inventeur: Pajot, Alain, F-92800 Puteaux (JP)
(74) Mandataire: Dronne, Guy

(56) Documents cités:
- DD-A- 216 217
- DE-C- 1 126 804
- FR-A- 2 128 058
- FR-A- 2 335 431
- FR-A- 2 379 452
- GB-A- 2 087 366
- US-A- 3 066 831
- US-A- 3 923 204

## Description

La présente invention a pour objet un dispositif pour l'extraction d'un produit à l'état divisé stocké dans un silo et son dosage volumétrique.

De façon plus précise, l'invention concerne un dispositif qui permet l'extraction d'un produit à l'état divisé, c'est-à-dire par exemple un produit du type pulvérulent ou granuleux, hors de son silo de stockage et de délivrer le produit divisé avec un débit volumétrique sensiblement constant.

Il existe de nombreux cas où l'on est amené à stocker dans des silos ou enceintes analogues des produits, notamment des poudres ou des granulés, afin de pouvoir à volonté extraire dans des conditions contrôlées le produit divisé et en prélever une quantité déterminée. Comme celà est connu, le prélèvement peut se faire soit à la sortie d'une conduite par une goulotte afin de le déverser dans un véhicule de transport, soit la sortie consiste dans une canalisation permettant d'acheminer directement le produit divisé à un endroit d'utilisation particulier, par exemple dans une chaîne de process industriel. Cette dernière situation se rencontre dans le cas, par exemple des industries chimiques, des industries alimentaires ou plus généralement toutes les industries utilisant des produits pulvérulents ou granuleux.

Dans le dernier cas évoqué, on comprend qu'il est nécessaire que le dispositif d'extraction, non seulement permette l'extraction du produit malgré d'éventuelles formations de voûte mais également de délivrer cette poudre avec un débit volumétrique sensiblement constant pour permettre la délivrance du produit dans le process industriel.

Dans le brevet FR-A-2 335 431, on a décrit un dispositif de fluidification et d'extraction de matériau divisé, selon le préambule de la revendication 1, permettant par fluidification du produit stocké dans le silo de s'opposer à la formation de voûte mais il ne permet pas de contrôler le débit volumique du produit divisé délivré. En effet, dans la technique de dévoûtage décrite ci-dessus, on opère par fluidification du produit, ce qui empêche le contrôle du débit car la densité apparente du produit divisé est variable.

Selon le brevet français mentionné, le dispositif d'extraction par fluidification comprend un arbre s'étendant à l'intérieur du silo qui porte dans des plans successifs perpendiculaires à son axe des moyeux sur lesquels est fixée au moins une bande souple déformable lestée à son extrémité qui présente une longueur au plus égale à la distance radiale séparant le pourtour extérieur du moyeu de la paroi du fond du silo.

Outre le fait que ce système d'extraction par fluidification du produit divisé présente certains inconvénients, et notamment de nécessiter une vitesse de rotation de l'arbre très élevée, de l'ordre de 450 tours par minute, ce dispositif ne permet pas de contrôler le débit volumétrique du matériau pulvérulent puisque celui-ci tombe directement dans des moyens d'entraînement disposés à la base du silo. On comprend qu'ainsi la quantité de produits divisés entraînés varie très sensiblement dans le temps en fonction des phénomènes de voûtage ou d'écoulement normaux qui entraînent des débits de poudre très différents.

Pour remédier à ces inconvénients, un objet de la présente invention est de fournir un dispositif d'extraction d'un produit à l'état divisé hors d'un silo qui permette non seulement une extraction efficace contre les phénomènes de voûtage et qui assure également un débit unique sensiblement constant du produit ainsi extrait.

Pour atteindre ce but, selon l'invention, le dispositif pour l'extraction d'un produit à l'état divisé stocké dans un silo comportant une partie inférieure d'évacuation convergente et pour le dosage volumétrique de ce produit comporte à l'intérieur de ladite partie inférieure des moyens de dévoûtage et comprend en outre une enceinte de décompression disposée à la partie inférieure dudit silo dont le diamètre est supérieur à celui de la section terminale de ladite partie inférieure convergente du silo avec laquelle elle communique, un ensemble d'entraînement dudit produit selon une direction sensiblement perpendiculaire à l'axe du silo qui communique avec l'extrémité inférieure de l'enceinte de décompression et se caractérise en ce qu'il comporte des moyens pour maintenir en charge ledit ensemble d'entraînement, lors de l'écoulement du produit divisé, disposés dans la zone où ladite enceinte de décompression débouche dans les moyens d'entraînement par quoi on obtient à la sortie desdits moyens d'entraînement une densité volumétrique sensiblement constante du produit divisé.

On comprend que, grâce à l'invention, le produit divisé extrait du silo par les moyens de dévoûtage pénètre dans l'enceinte de décompression qui permet au produit extrait de se décomprimer régulièrement. On comprend en particulier que, dans cette zone, le produit divisé n'est plus soumis à l'influence de la charge due au produit contenu dans le silo. Ceci permet donc de traiter un produit qui a une densité constante quel que soit l'état de remplissage, c'est-à-dire quelle que soit la charge présente dans le silo. On comprend en outre que les moyens disposés entre la sortie de la zone de décompression et l'entrée des moyens d'entraînement permettent de maintenir en permanence lors de l'extraction, le dispositif d'entraînement en charge, c'est-à-dire entièrement rempli du produit divisé. On voit donc qu'à la sortie des moyens d'entraînement on obtient effectivement un débit volumétrique sensiblement constant.

Selon un mode préféré de réalisation de l'invention, les moyens de dévoûtage comprennent un arbre disposé verticalement selon l'axe du silo, une pluralité de moyeux disposés perpendiculairement audit arbre dans des plans successifs et des aubes dont une extrémité est solidaire d'un desdits moyeux, lesdites aubes ayant la forme de bandes réalisées en un matériau semi-rigide dont la longueur est au plus égale à la distance radiale séparant le pourtour du moyeu de la paroi du silo.

Les essais effectués avec un tel dispositif de dévoûtage à aubes semi-rigides ont montré que les performances étaient au moins égales à celles produites par les dispositifs de dévoûtage du type à bandes souples déformables lestées et il présente l'avantage substantiel de pouvoir être entraîné en rotation à une vitesse très inférieure à celle qui était nécessaire avec les dispositifs de dévoûtage de l'art antérieur, par exemple de l'ordre de 15 à 50 tours/minute. En outre, du fait que la vitesse de rotation des aubes est très sensiblement réduite, leur usure l'est également. De plus le système de dévoûtage qui combine des aubes semi-rigides et une vitesse de rotation basse nécessite une puissance qui est equivalente à celle des systèmes à aubes souples mais qui est très inférieure à celle des systèmes à aubes rigides.

D'autres caractéristiques et avantages de la présente invention apparaîtront plus clairement à la lecture de la description qui suit d'un mode de réalisation de l'invention donné à titre d'exemple non limitatif. La description se réfère aux figures annexées sur lesquelles :
- la figure 1 est une vue en coupe verticale de l'ensemble du dispositif d'extraction et de délivrance de produits divisés ;
- la figure 2 est une vue partielle de dessus montrant en particulier les moyens d'entraînement ; et
- la figure 3 est une vue schématique de l'ensemble de l'installation pour en expliquer le principe de fonctionnement.

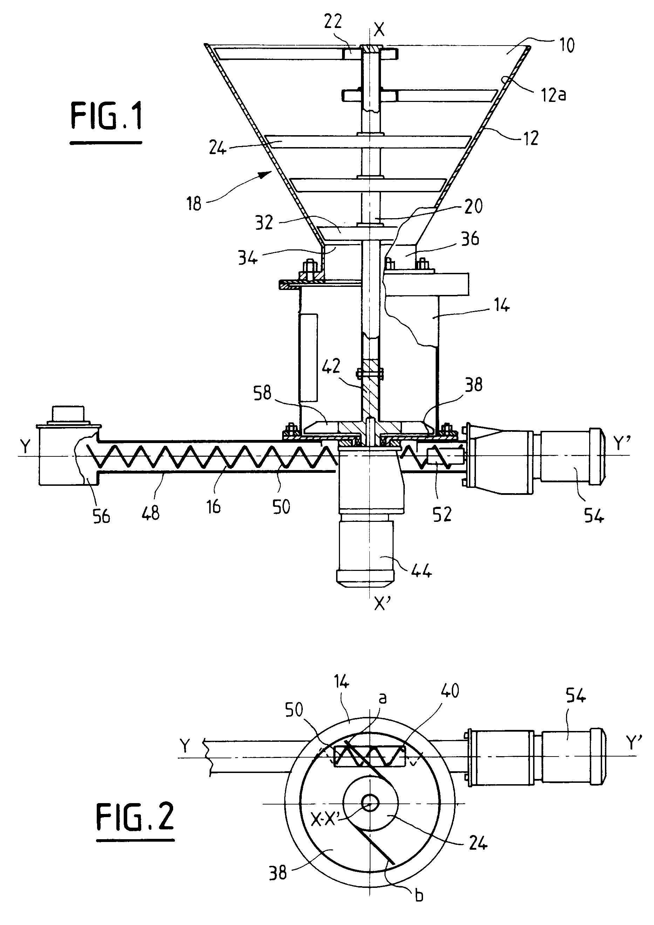

En se référant tout d'abord à la figure 1, on va décrire un mode préféré de réalisation du dispositif d'extraction et de dosage. Celui-ci comprend un silo 10 dont on a seulement représenté la partie inférieure 12 de forme cônique. Il comprend également un cylindre de décompression 14 relié à la partie inférieure de la portion cônique 12 du silo et un dispositif ou système d'entraînement 16 disposé à la partie inférieure du cylindre de décompression. En outre, à l'intérieur de la partie cônique 12 du silo est monté un dispositif de dévoutage 18 que l'on va maintenant décrire plus en détails.

Le système de dévoûtage 18 comporte un arbre vertical 20 disposé selon l'axe XX′ du silo 10. Cet arbre 20 est disposé essentiellement dans la partie cônique terminale 12 du silo. Sur cet arbre est fixée une pluralité de moyeux cylindriques horizontaux 22, 24,....32. Sur la périphérie de chaque moyeu 22 à 32 sont fixés deux aubes respectivement référencées pour chaque moyeu a et b. Comme le montre mieux la figure 2, ces aubes comportent une première extrémité qui est solidaire du moyeu correspondant, par exemple le moyeu 22, et une deuxième extrémité libre. Chaque aube a, b est constituée par une bande d'un matériau semi-rigide dont la longueur est au plus égale à la distance radiale entre la périphérie du moyeu et la paroi 12a du silo. Les autres ont donc des longueurs différentes, en fonction de la position du moyeu sur lequel elles sont fixées. De préférence, chaque moyeu comporte deux aubes mais il pourrait en comporter un nombre différent. Pour présenter les caractéristiques requises de semi-rigidité les aubes peuvent être réalisées en acier à ressort, en un matériau composite ou en tout autre matériau présentant des propriétés élastiques similaires. Comme on le voit sur la figure 1, les aubes ont des longueurs qui vont en décroissant lorsqu'on se rapproche de la sortie du silo 10.

La sortie 34 du silo est raccordée à une portion cylindrique 36 de diamètre D1. Cette portion cylindrique 36 du silo est fixée sur ladite enceinte de décompression 14 qui présente un diamètre constant D2 significativement supérieur au diamètre D1 de la sortie du silo. Comme on le voit mieux sur la figure 2, le fond 38 de l'enceinte de décompression 14 présente une ouverture sensiblement rectangulaire allongée 40 qui est excentrée par rapport à l'axe vertical XX′ du silo et qui est alignée sensiblement avec l'axe YY′ du système d'entraînement 16. L'arbre vertical 20 se prolonge par une partie 42 dans le cylindre de décompression 14 et son extrémité est raccordée à l'arbre de sortie d'un moteur d'entraînement 44 disposé en-dessous du fond du cylindre de décompression. Le système d'entraînement 16 est essentiellement constitué par une conduite cylindrique 48 dont l'axe est l'axe YY′. A l'intérieur de la conduite cylindrique 48 est monté un ensemble de spires d'entraînement de type connu 50, ou tout autre moyen équivalent tel qu'une hélice, dont une extrémité 52 est solidaire d'un moteur d'entraînement 54. A l'extrémité opposée au moteur 54, la conduite d'entraînement 48 est munie, selon le mode de réalisation considéré, d'une goulotte de sortie à axe vertical 56.

En outre, on voit que le cylindre de décompression 14 comporte à proximité de son fond 38 un bras rotatif de mise en charge 58 qui peut, de préférence, être solidaire en rotation de l'arbre 20. Comme on l'expliquera ultérieurement, ce bras 58 a pour objet de maintenir en permanence en charge toute la conduite 48 du système d'entraînement du produit divisé.

On va maintenant décrire tout d'abord le fonctionnement du système de dévoûtage, ou turbine de dévoûtage, formé par l'arbre 20, les moyeux 22 à 32 et les aubes a et b solidaires de ces moyeux. Lorsque le silo est vide et que la turbine de dévoûtage est en rotation, les aubes a et b restent droites dans un plan horizontal. Il en va de même si la turbine de dévoûtage est à l'arrêt. Lorsque le silo est plein et que la turbine de dévoûtage est mise en rotation, la présence du produit à extraire dans la partie basse du silo oblige les aubes à se replier progressivement autour du moyeu d'une façon plus ou moins importante en fonction de paramètres tels que la longueur de l'aube, la rigidité de l'aube, la nature du produit à extraire. C'est l'utilisation d'aubes semi-rigides qui permet d'abaisser la puissance nécessaire à l'entrainement de la turbine.

Quand une voûte commence à se constituer dans la partie 12 du silo, l'aube située à son niveau rencontre moins de résistance et même éventuellement un vide. Elle ajuste automatiquement son action du fait de sa semi-rigidité et, en grattant la voûte formée par le produit, elle en provoque l'écroulement.

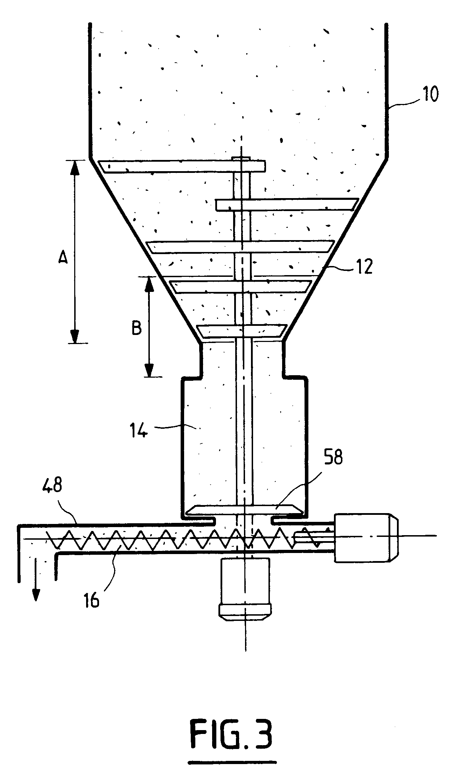

En se référant maintenant à la figure 3, on va décrire le fonctionnement du dispositif d'extraction et de dosage. Sous l'effet de la turbine de dévoûtage, en cas de formation de voûte, le produit pulvérulent vient remplir la partie inférieure ou la totalité de la zone cônique 12 du silo. Dans la partie inférieure 12 du silo, on trouve en fait une zone A d'action de la turbine de dévoûtage et dans celle-ci une zone inférieure B de compression du produit divisé. Dans cette région, le produit à extraire subit donc une compression (zone B) qui établit une séparation efficace entre le produit stocké dans le silo 10 et la zone cylindrique 36 de celui-ci. Dans cette région, on obtient une couche de produit à densité augmentée du fait de la compression et donc stabilisée par rapport au produit stocké au-dessus qui peut présenter, en fonction des diverses pressions exercées dans le silo, en particulier selon son taux de remplissage, des différences de densité apparentes qui seraient défavorables pour obtenir un dosage volumétrique fiable. Puis le produit passe de la zone de compression dans le cylindre d'expansion 14 qui présente, comme on l'a déjà indiqué, un diamètre sensiblement supérieur à celui de la sortie 34 du silo. Ce cylindre de décompression permet au produit initialement comprimé dans la zone 12 de s'expanser régulièrement. On comprend qu'ainsi le produit qui pénètre dans le cylindre 14 ne subit plus aucune influence due à la charge créée par le produit contenu dans le silo. En d'autres termes, le produit qui transite et qui pénètre dans le cylindre de décompression est découplé du produit contenu dans le silo. Celà permet de travailler un produit qui a une densité constante que le silo soit totalement plein, partiellement plein ou vide. Plus précisément, le système d'entraînement fonctionne à densité apparente sensiblement constante tant que la zone B de compression existe, c'est-à-dire pratiquement jusqu'à ce que le silo soit vide.

A la partie inférieure du silo, le bras de mise en charge 58 a pour fonction de forcer le passage du produit contenu dans la partie inférieure du cylindre de décompression vers le système d'entraînement 16 à travers l'orifice 40 ménagé dans le fond du cylindre de décompression. On obtient ainsi comme résultat que la conduite 48 formant le système d'entraînement est maintenue en permanence remplie du produit à doser, donc en charge. On a ainsi un remplissage permanent du système d'entraînement sans que toutefois une pression variable ne soit exercée sur ce produit en raison de la présence de la chambre de décompression. On comprend qu'on obtient ainsi à la sortie du système d'entraînement 16, par exemple au niveau de la goulotte 56, un débit de produit présentant une densité apparente régulée. En d'autres termes, on obtient la délivrance d'un poids régulier et reproductible du produit au niveau de la goulotte 56.

Dans la description précédente, on a considéré le cas où la partie inférieure d'évacuation 12 du silo était conique et présentait le-même axe vertical que la partie principale du silo. Il va de soi qu'on ne sortirait pas de l'invention si la partie inférieure 12 du silo avait une autre forme convergente par exemple la forme d'un tronc de pyramide ou encore celle d'un cône déporté. En conséquence, l'axe de la turbine de dévoûtage n'est pas nécessairement confondu avec celui du silo. Il peut être décalé ou même incliné.

## Revendications

1. Dispositif pour l'extraction d'un produit à l'état divisé stocké dans un silo (10) comportant une partie inférieure d'évacuation convergente (12) et pour le dosage volumétrique de ce produit, comportant à l'intérieur de ladite partie inférieure (12) des moyens de dévoûtage (18) et comprenant en outre une enceinte de décompression (14) disposée à la partie inférieure dudit silo et dont le diamètre est supérieur à celui de la section terminale de ladite partie convergente du silo avec laquelle elle communique, un ensemble d'entraînement (16) dudit produit selon une direction sensiblement perpendiculaire à l'axe du silo qui communique avec l'extrémité inférieure de l'enceinte de décompression, caractérisé en ce qu'il comporte des moyens (58) pour maintenir en charge ledit ensemble d'entraînement, lors de l'écoulement du produit divisé, disposés dans la zone où ladite enceinte de décompression débouche dans les moyens d'entraînement par quoi on obtient à la sortie desdits moyens d'entraînement une densité volumétrique sensiblement constante du produit divisé.

2. Dispositif selon la revendication 1, caractérisé en ce que les moyens de dévoûtage (18) comprennent un arbre (20) disposé selon l'axe de ladite partie inférieure dudit silo, une pluralité de moyeux (22 à 32) disposés perpendiculairement audit arbre dans des plans successifs et des aubes (a,b) dont une extrémité est solidaire d'un desdits moyeux, les aubes ayant la forme de bandes réalisées en un matériau semi-rigide dont la longueur est au plus égale à la distance radiale séparant le pourtour du moyeu de la paroi du silo (10, 12).

3. Dispositif selon l'une quelconque des revendications 1 et 2, caractérisé en ce que lesdits moyens de mise en charge comprennent un bras rotatif (58) monté pivotant autour de l'axe de ladite enceinte de décompression (14) à proximité du fond (38) de celle-ci.

4. Dispositif selon la revendication 2, caractérisé en ce que ledit arbre (20) des moyens de dévoûtage (18) est entraîné en rotation autour de son axe avec une vitesse comprise entre 15 et 50 tours par minute.

5. Dispositif selon l'une quelconque des revendications 1 à 4, caractérisé en ce que ladite partie inférieure (12) du silo est conformée pour définir une zone inférieure (B) de compression disposée au-dessus de l'enceinte de décompression (14).

## Claims

1. Device for extracting bulk material stored in a silo (10) comprising a lower converging evacuation part (12) and for the volumetric dosing of this material, comprising de-bridging means (18) in the interior of the said lower part (12) and moreover including a decompression chamber (14) disposed in the lower part of the said silo, the diameter of which is greater than that of the end section of the said converging part of the silo with which it communicates, and an assembly (16) for driving the said material in a direction substantially perpendicular to the axis of the silo which communicates with the lower end of the decompression chamber, characterised in that it comprises means (58) for keeping the said drive assembly loaded during the flow of the bulk material, disposed in the zone in which the said decompression chamber opens into the drive means, by which means a substantially constant volumetric density of the bulk material is obtained at the outlet of the said drive means.

2. Device according to claim 1, characterised in that the de-bridging means (18) include a shaft (20) disposed along the axis of the said lower part of the said silo, a plurality of hubs (22 to 32) disposed perpendicularly to the said shaft in successive planes and blades (a, b), one end of which is integral with one of the said hubs, the blades being in the form of strips made of a semi-rigid material, the length of which is at least equal to the radial distance separating the periphery of the hub from the wall of the silo (10, 12).

3. Device according to either of claims 1 and 2, characterised in that the said loading means include a rotary arm (58) mounted to pivot about the axis of the said decompression chamber (14) in the vicinity of the bottom (38) of the latter.

4. Device according to claim 2, characterised in that the said shaft (20) of the de-bridging means (18) is driven in rotation about its axis at a speed of between 15 and 50 rpm.

5. Device according to any one of claims 1 to 4, characterised in that the said lower part (12) of the silo is shaped to define a lower compression zone (B) disposed above the decompression chamber (14).

## Patentansprüche

1. Vorrichtung zum Fördern von Schüttgut, das in einem Speicher (10) gelagert ist, mit einem zusammenlaufenden Förderunterteil (12), Ausgleichsmitteln (18) im Inneren des Unterteils (12) für die Volumendosierung des Gutes, einem am Unterteil des Speichers angeordneten Dekompressionsbehälter (14), dessen Durchmesser größer als der des Schlußabschnitts des zusammenlaufenden Teils des Speichers ist, mit dem er in Verbindung steht, und einer Mitnahmeeinheit (16) für das Schüttgut, deren Ausrichtung im wesentlichen rechtwinklig zur Speicherachse ist, und die mit dem unteren Ende des Dekompressionsbehälters in Verbindung steht,
dadurch gekennzeichnet, daß
sie Mittel (58) zum Beaufschlagen der Mitnahmeeinheit während des Ableitens des Schüttguts enthält, die in dem Bereich angeordnet sind, in dem der Dekompressionsbehälter in die Mitnahmeeinheit mündet, wodurch man am Ausgang der Mitnahmeeinheit eine im wesentlichen konstante Volumendichte des Schüttguts erhält.

2. Vorrichtung nach Anspruch 1, dadurch gekennzeichnet, daß die Ausgleichsmittel (18) eine entlang der Achse des Speicherunterteils ausgerichtete Welle (20) enthalten sowie eine Vielzahl von Naben (20-32), die senkrecht zu der Welle in aufeinanderfolgenden Ebenen angeordnet sind und Schaufeln (a, b), von denen ein Ende fest mit einer der Naben verbunden ist, wobei die Schaufeln aus halbstarrem Material in Form von Streifen gebildet sind, deren Länge höchstens dem radialen Abstand zwischen der Nabenaußenseite und der Speicherwand (10, 12) enspricht.

3. Vorrichtung nach einem der Ansprüche 1 und 2, dadurch gekennzeichnet, daß die Mittel zum Beaufschlagen einen Dreharm (58) enthalten, der drehbar um die Achse des Dekompressionsbehälters (14) in der Nähe von dessen Boden (38) montiert ist.

4. Vorrichtung gemäß Anspruch 2, dadurch gekennzeichnet, daß die Welle (20) der Ausgleichsmittel (18) um ihre Achse in eine Drehbewegung mit einer Drehgeschwindigkeit zwischen 15 und 50 U/min versetzt wird.

5. Vorrichtung gemäß einem der Ansprüche 1 bis 4, dadurch gekennzeichnet, daß das Speicherunterteil (12) so ausgebildet ist, daß es einen unteren Kompressionsbereich (B) oberhalb des Dekompressionsbehälters (14) bildet.
